# EUROPEAN PATENT SPECIFICATION

(11) **EP 0 817 153 B1**
(45) Date of publication and mention of the grant of the patent: **07.05.2003**
(21) Application number: 96110713.3
(22) Date of filing: 03.07.1996
(51) Int. Cl.: G09B 5/06, G09B 7/02, G09B 15/00, G10H 1/00

(54) **Multimedia reading and learning auxiliary device and the method of operating the same**
Multimediahilfsvorrichtung zum Lesen und Lernen und Betriebsverfahren dafür
Dispositif multimedia d'aide à la lecture et à l'apprentissage et méthode d'utilisation

(43) Date of publication of application: 07.01.1998
(73) Proprietor: Lin, Jen-Chung, Taipei Hsien (TW); Shin, Chin-Chih, Hsin-Tien (TW)
(72) Inventor: Lin, Jen-Chung, Taipei Hsien (TW); Shin, Chin-Chih, Hsin-Tien (TW)
(74) Representative: Rottmann, Maximilian R.

(56) References cited:
- EP-A- 0 701 243
- EP-A- 0 720 157
- WO-A-91/17535
- WO-A-93/22733
- GB-A- 2 201 028
- US-A- 5 121 667
- US-A- 5 225 618
- US-A- 5 365 434
- US-A- 5 390 158
- US-H- H1 452

## Description

### BACKGROUND OF THE INVENTION

### Field of the invention

The present invention relates to a multimedia reading and learning auxiliary device for printed books according to claim 1 and its operating method according to claim 6.

### Description of related prior arts

Nowadays, learning tools may include printed books, audio tapes, video tapes, IC cards, electronic dictionaries, audio CDs, video CDs and CD-ROMs. Although each tool has its own advantages and is widely used in practice, each tool also has some drawbacks that diminish the learning efficiency of users.

In the case of printed books, only printed words and static pictures are provided. This tool lacks human speech for further explanation of a point and lacks videos to further assist understanding. This results in a rigid and uninteresting learning process, and diminishes the understanding efficiency for a learner.

In the case of audio tapes, remarks and accompanying music are stored on the tapes. However, the repetitiveness of an audio tape is bad. It is hard to fast forward or rewind an audio tape exactly to a desired position. In addition, audio tapes can only be played back monotonously; they cannot provide an interactive way to learn for the users. Audio tapes also lack videos for assisting understanding. If the users want to control the playback order by themselves, they will encounter difficulties of searching for a desired position. Furthermore, audio tapes do not have random access function, so it causes boredom.

In the case of video tapes, compared with audio tapes, the video tapes further provide videos, but otherwise they have the same drawbacks as the audio tapes. Further, since the video tapes are played back on TV, the users have to endure long periods of watching the monitor of the TV which may cause fatigue or even eye damage. Therefore, the learning efficiency is lowered.

In the case of IC-card reader, a commercial product is provided, which combines IC cards with picture paper boards. Users may touch a picture on the picture paper board, then an audio remark corresponding to the picture is played back. However, the IC-card reader suffers from the drawbacks of small storage capacity, short playback time, high cost and poor sound quality. Furthermore, IC-card reader lacks static or moving pictures for assisting studying. In general, this approach can not provide an effective way for users to learn.

In the case of electronic dictionaries, since the electronic dictionaries employ IC cards, it has the same drawbacks as IC-card reader, i.e., small storage capacity, short playback time, high cost and poor sound quality. Furthermore, the electronic dictionaries display letters and pictures on small LCDs having poor resolution and color, which can display only few letters and pictures. The long periods of continuously watching the small LCD display may cause learner being tired. Moreover, it can not make notes on an electronic dictionary, and the keypad of the electronic dictionaries is too complex for users to operate.

WO-A-93 22733 discloses a portable and battery-operated keyed language translator that is designed specifically to translate a word or a sentence of one language to another language, which cannot serve other learning information or display on a computer monitor or television.

In the case of audio CD's, restricted by its data format, each audio CD can only play back for about 60 minutes, and can not be divided into more than 99 divisions. Therefore, the audio CD's can not repeatedly play back a sentence, or even a word, and can not provide a large amount of remarks to facilitate understanding, especially while studying a language-learning book. Using audio CDs as a learning tool can not provide users an interactive way to learn and audio CDs lack pictures or videos for assisting understanding.

In the case of video CDs, the video CDs are suitable for playing video games or movies, but not suitable for studying. They have the same drawbacks as the audio CDs. Moreover, since all of data including words and pictures are displayed on a monitor, the long periods of continuously watching the monitor may cause learner fatigue and lower the learning efficiency. Also the video CDs do not have voice recording and playback functions.

In the case of CD-ROMs, although the CD-ROMs provide the users data in different types, this approach is not suitable for long periods of reading and studying since all data including words and pictures are displayed on a vertical-standing monitor. The users are forced to continuously watch at the shinning monitor from the very first beginning till the end. Moreover, to use a CD-ROM, an user has to know how to operate DOS, WINDOWS or other software. This is an obstacle to users who do not know how to use computers. Also, it is difficult to make notes, which can be easily taken on a printed book, on a monitor screen. Furthermore, the user can only see one page displayed on the monitor screen but cannot touch the book and have the complete, solid feelings like when holding a printed book.

GB-A-2 201 028 discloses a method and apparatus for controlling data recording medium playback apparatus by means of a bar code reader.

WO-A-91 17535 discloses a sound and learning system which comprises a media with barcodes thereon associated with respective items, a bar code reader, a compact disc containing sounds associated with the respective items and a CD player. One disadvantage of barcodes is when the barcodes printed on the media, e.g. a printed book, are slightly stained or bent, they are difficult for the barcode scanner to identify. Another disadvantage of barcodes is the long bulky bar codes occupy too much space of book pages to keep the unity and neatness of the pages on the printed books

### SUMMARY OF THE INVENTION

The drawbacks of the learning tools mentioned above diminish the learning efficiency. Accordingly, the present invention is accomplished combining all advantages of the current learning tools and overcoming the drawbacks by analyzing the characteristics of each learning tool.

The object of the present invention is to provide a multimedia reading and learning auxiliary device for printed books, which may provide an interactive way for users to learn and permits the users to arbitrarily retrieve audio/video data and additional remarks from any section of the printed book through the multimedia reading and learning auxiliary device, so that the learning efficiency of users rises considerably.

Another object of the present invention is to provide an operating method o a multimedia reading and learning auxiliary device for printed books, wherein an user can arbitrarily retrieve relevant audio/video data and additional remarks by utilizing a simple keypad to input an index code to the multimedia reading and learning auxiliary device while the user is reading the printed book, wherein the index codes can be digits or letters printed on the desired positions of the printed book or numbers of the printed book.

The audio/video data and additional remarks relevant to each divided section of the printed book can be made by different PCM sampling methods, formatted as MIDI (Musical Instrument Digital Interface) data or compressed through various compression methods, and stored in a compact disc in a special format which conforms to ISO 9660 standard. Therefore, the playback time of this compact disc can be extended to over 5 to 6 hours. Much more relevant audio/video data and additional remarks can be stored in-this compact disc. In addition to the relevant data and additional remarks, various kinds of literary essays, poems, jokes, short love stories, songs, musics and fables can also be stored in this compact disc, so that after tired with reading the user can enjoy them instantly for a break, as long as he keys in the separate index codes which are printed right on the book. Therefore, a printed book becomes more interesting and attractive to read because the use of the present invention. A printed book becomes so panoramous because it contains not only a large amount of audio/video explanations on knowledge, but also lots of audio/video fun and entertainment.

In the present invention, index codes can be alphanumeric figures printed beside each sentence or each word or patterns in a picture or numbers printed on the printed book. The users may input one index code to the multimedia reading and learning auxiliary device by simply operating a keypad, then the multimedia reading and learning auxiliary device retrieves the corresponding audio/video data from a compact disc. Thus, an user can easily handle the multimedia reading and learning auxiliary device of the present invention within several minutes, even though he does not know anything about computers.

Further, the multimedia reading and learning auxiliary device may be upgraded by mounting add-on cards, such as a KARAOKE card, MIDI card and/or MPEG (Motion Picture Expert Group) card, to provide additional entertainment functions other than its major reading and learning features.

### BRIEF DESCRIPTION OF THE DRAWINGS

The following detailed description, given by way of example and not intended to limit the invention solely to the embodiments described herein, will best be understood in conjunction with the accompanying drawings in which:
Fig. 1a illustrates the appearance of one preferred embodiment of a multimedia reading and learning auxiliary device according to the present invention;
Fig. 1b illustrates the appearance of one preferred embodiment of a remote controller for the multimedia reading and learning auxiliary device of the present invention;
Fig. 2 is a block diagram of one preferred embodiment of a multimedia reading and learning auxiliary device according to the present invention;
Figs. 3a to 3e are diagrams illustrating the construction of the multimedia reading and learning auxiliary device according to one preferred embodiment of the present invention;
Figs. 4a to 4g are diagrams illustrating the operating process of the multimedia reading and learning auxiliary device according to the present invention; and
Figs. 5a to 5g are circuit diagrams corresponding to the components of the construction as shown in Figs. 3a to 3e.

### DETAILED DESCRIPTION OF THE PREFERRED EMBODIMENTS

The multimedia reading and learning auxiliary device of the present invention is intended to accompany the use of a printed book. A plurality of index codes which are alphanumeric figures printed beside each sentence or each word or patterns in a picture or numbers printed on the printed book are provided. Each index code corresponds to some relevant data and additional remarks stored in a compact disc. The data stored in the compact disc can be in different types of format such as audio remarks, music or video. Furthermore, the different types of data employing various sampling sizes, sampling frequencies, MIDI formats and compressed methods can be stored in the compact disc simultaneously. A user can arbitrarily retrieve audio/video data and additional remarks relevant to a book he is reading from a compact disc by inputting index codes printed in the text of the book to the multimedia reading and learning auxiliary device.

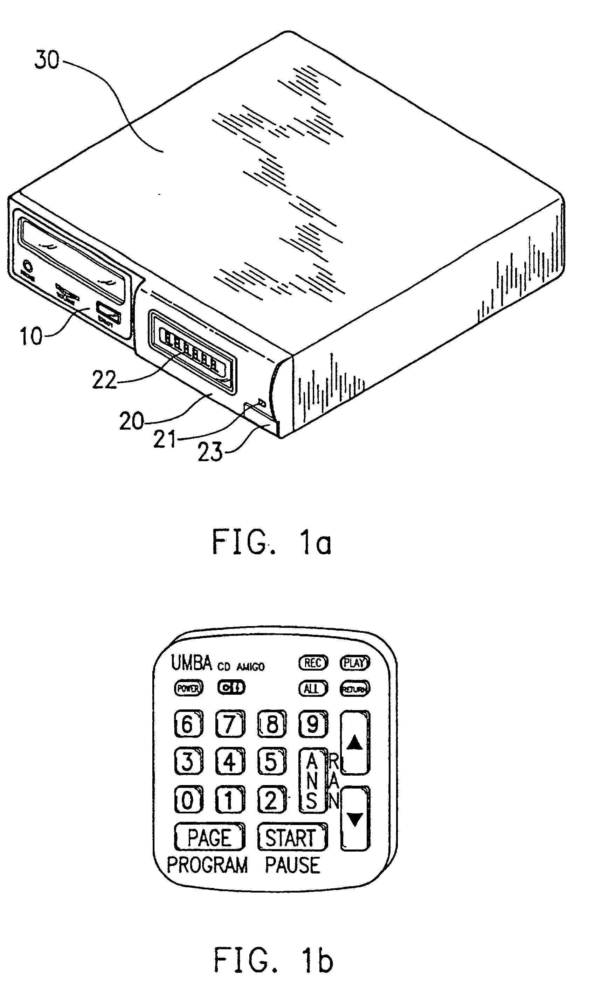

Referring to Fig. 1a, the appearance of the multimedia reading and learning auxiliary device according to one preferred embodiment of the present invention includes a CD-ROM player 10, a control panel 20, and a casing 30, wherein, a power switch 21, a light-emitting diode display 22, a hidden microphone and earphone jacks 23 are provided on the control panel 20. Further, the multimedia reading and learning auxiliary device comprises a keypad which is connected to the CD-ROM player by wireless means, the CD-ROM player is controlled by the keypad. The arrangement of the keys on the keypad can be as shown in Fig. 1b.

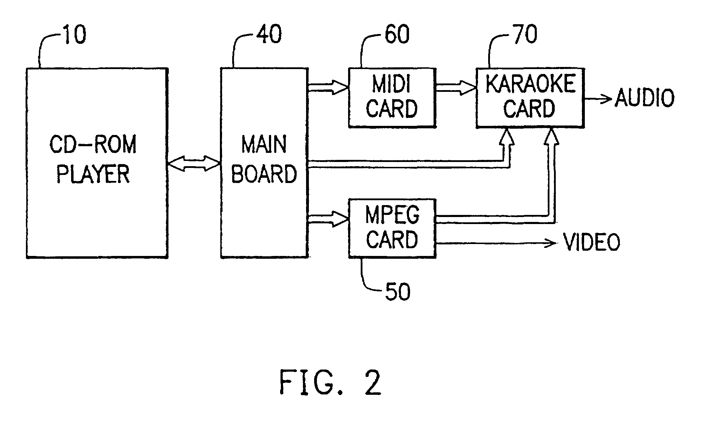

Referring to Fig. 2, the construction of the multimedia reading and learning auxiliary device according to one preferred embodiment of the present invention includes: a CD-ROM player 10 and a main board 40. The multimedia reading and learning auxiliary device may further include: a MIDI (Musical Instrument Digital Interface) card 60, a KARAOKE card 70 and a MPEG card 50 wherein the MIDI card 60, the KARAOKE card 70 and the MPEG card 50 are alternative components which can be added to the multimedia reading and learning auxiliary device as desired.

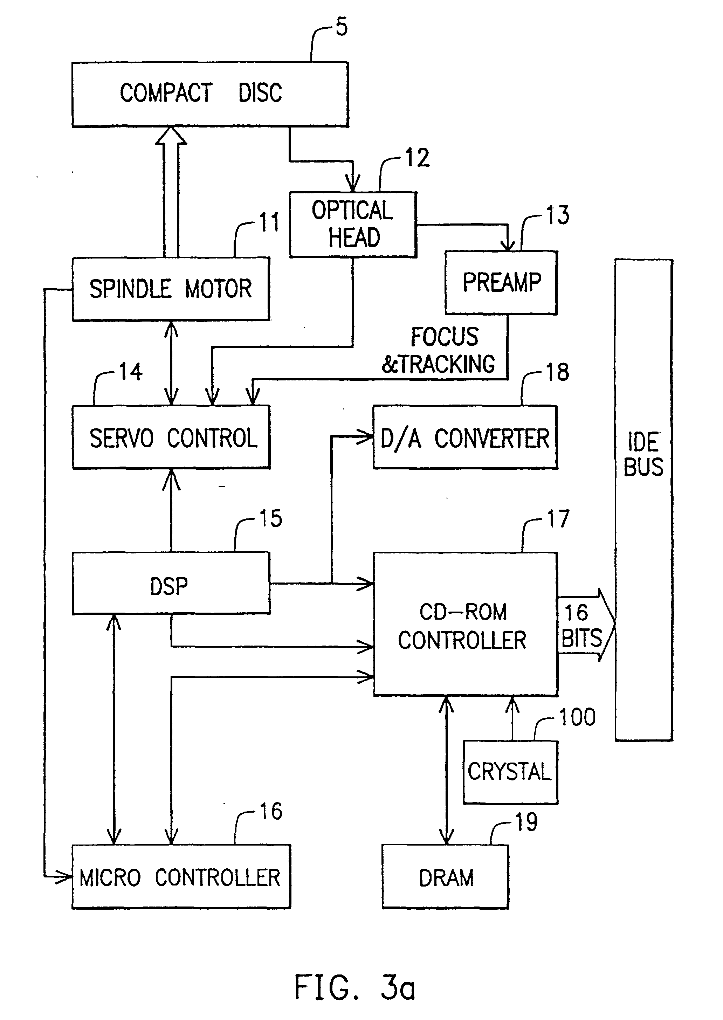

Referring to Fig. 3a, a CD-ROM player 10 includes: a spindle motor 11, an optical head 12, a pre-amplifier 13, a servo controller 14, a digital signal processor (DSP) 15, a microcontroller 16, a CD-ROM controller 17, a D/A converter 18, a DRAM 19 and an oscillator 100. Wherein, the spindle motor 11 drives the compact disc 5, and then the optical head 12 retrieves data from the compact disc 5 and sends the data, focusing signal and tracking signal to the pre-amplifier 14.

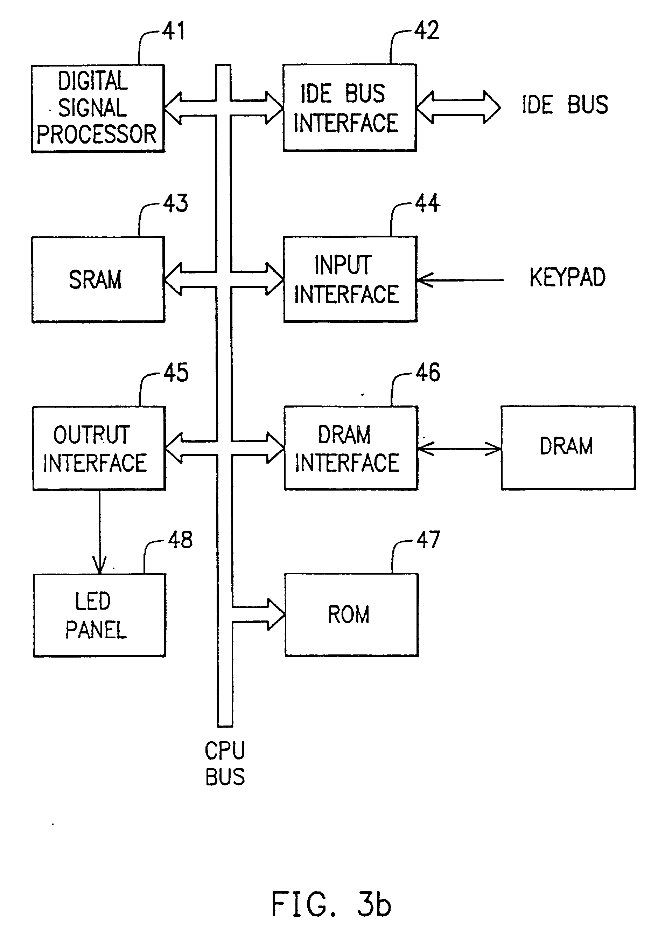

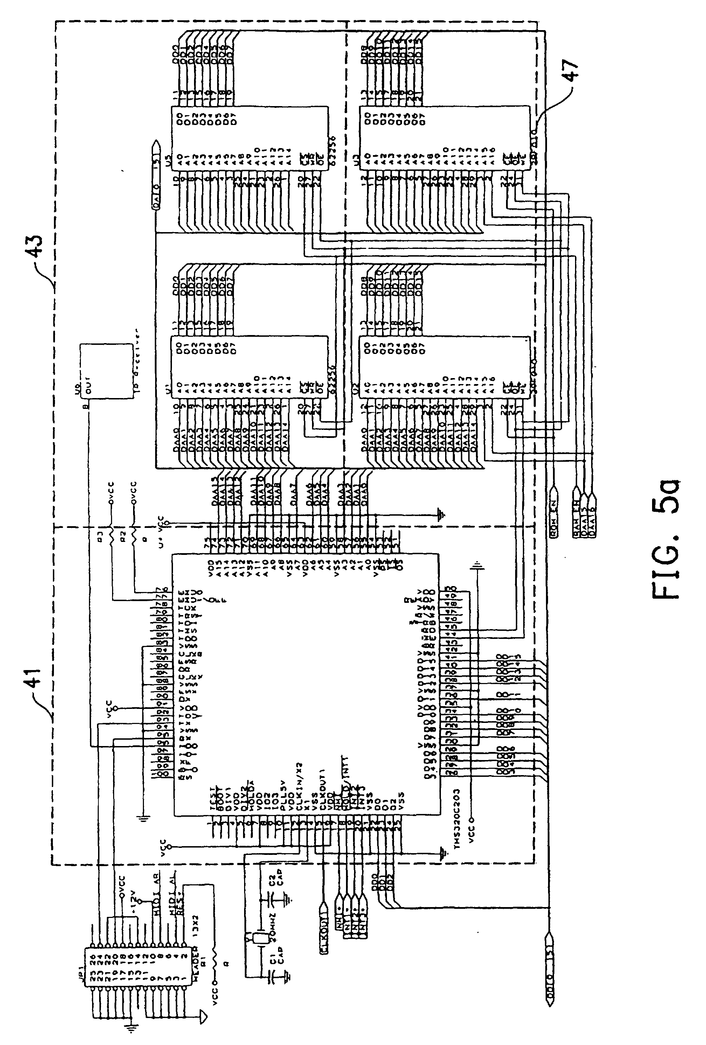

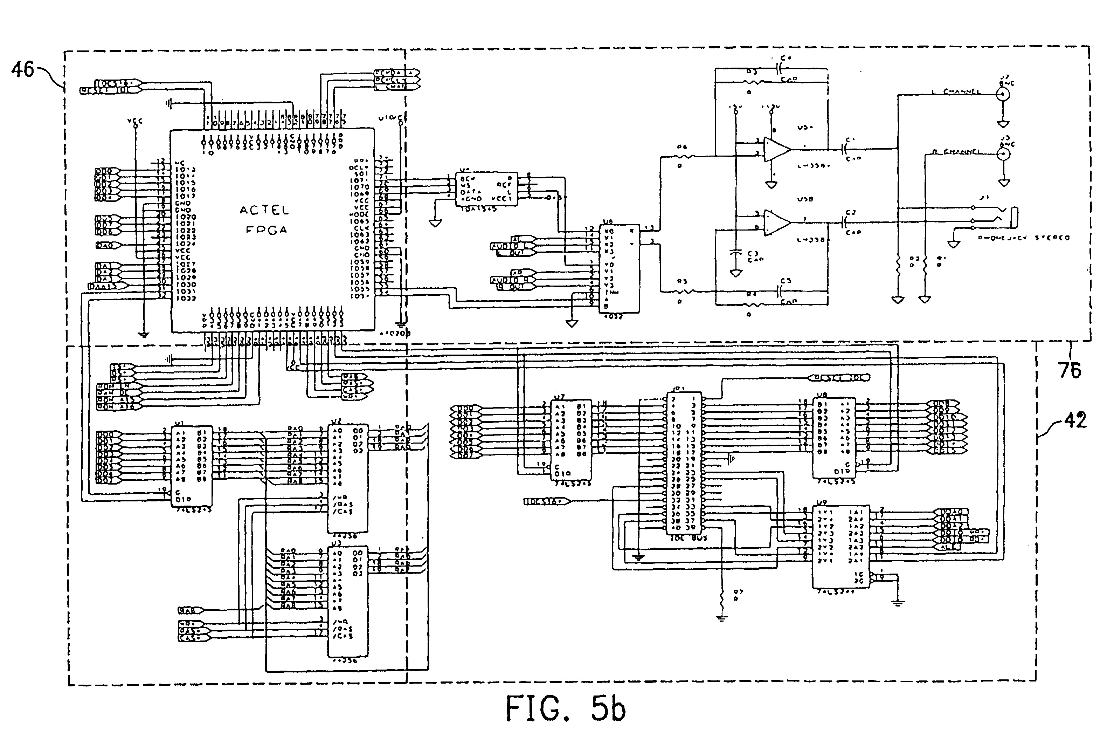

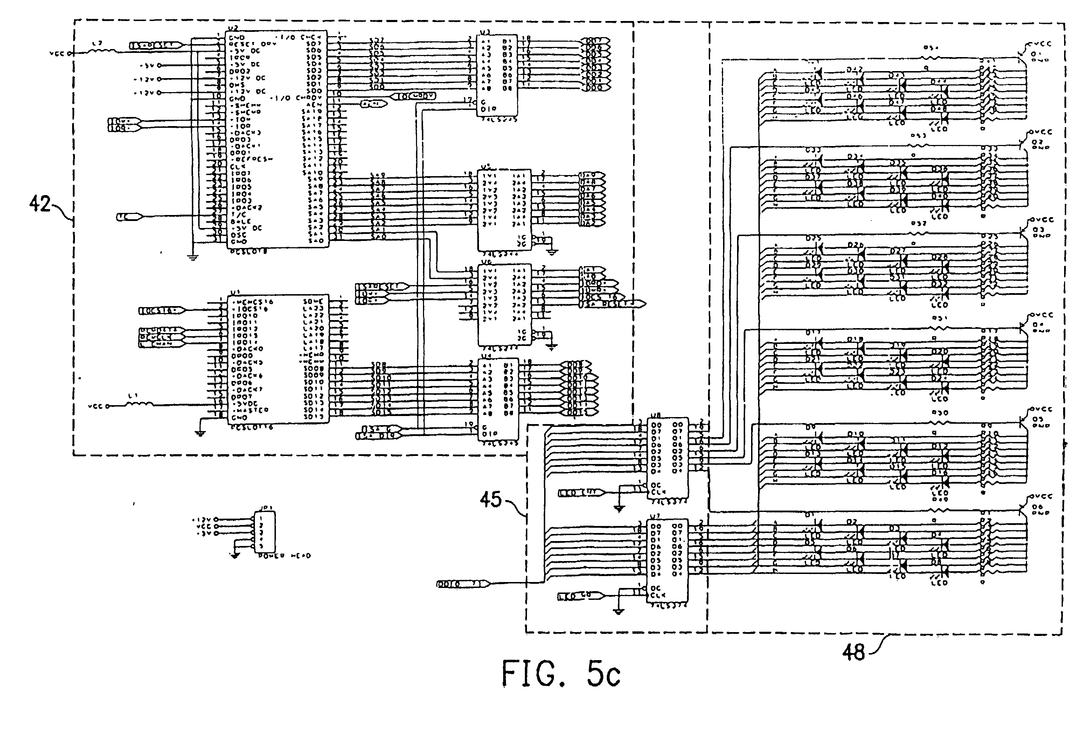

Referring to Fig. 3b, the main board 40 includes: a digital signal processor 41, an IDE (Integrated Device Electronics) bus interface 42, a SRAM (Static Random Access Memory) 43, an input interface 44, an output interface 45, a DRAM (Dynamic Random Access Memory) interface 46 and a ROM (Read Only Memory) 47, wherein, all components above are interconnected by a CPU (Central Processing Unit) bus. The main board 40 displays data on a LED (Light-Emitting Diode) panel 48 via the output interface 45, and receives control data inputted from a keypad in a wired or wireless way via the input interface 44. The main board 40 connects to IDE bus through the IDE bus interface 42, thereby connects to the CD-ROM player. In addition, both the capacities of the SRAM 43 and the ROM 47 are 128Kx16 bits. Detailed circuit diagrams of the main board 40 are illustrated in Figs. 5a to 5c.

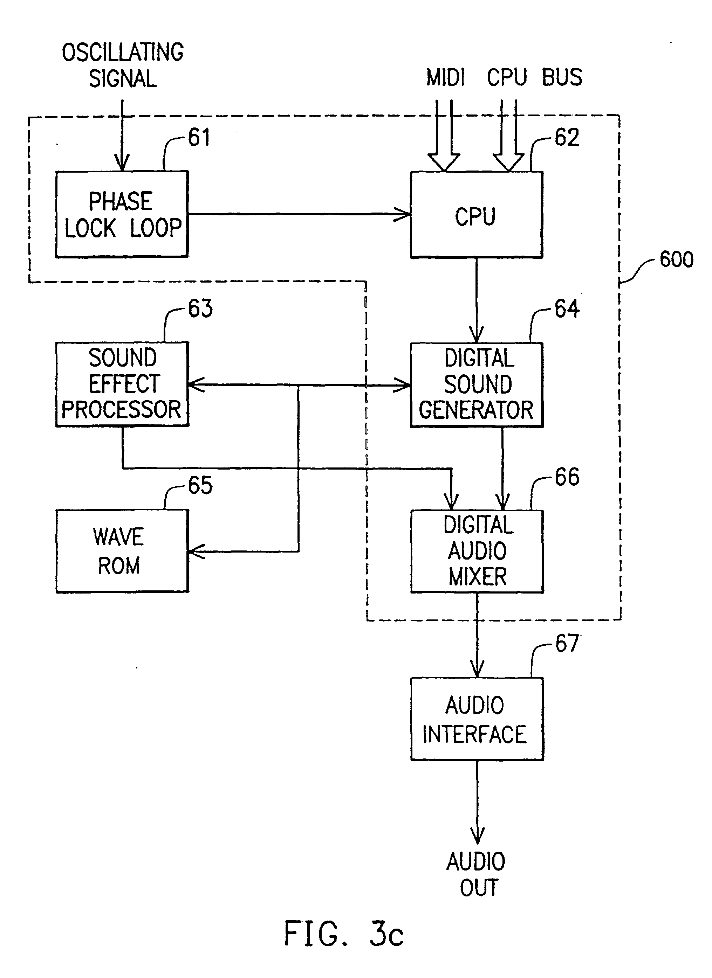

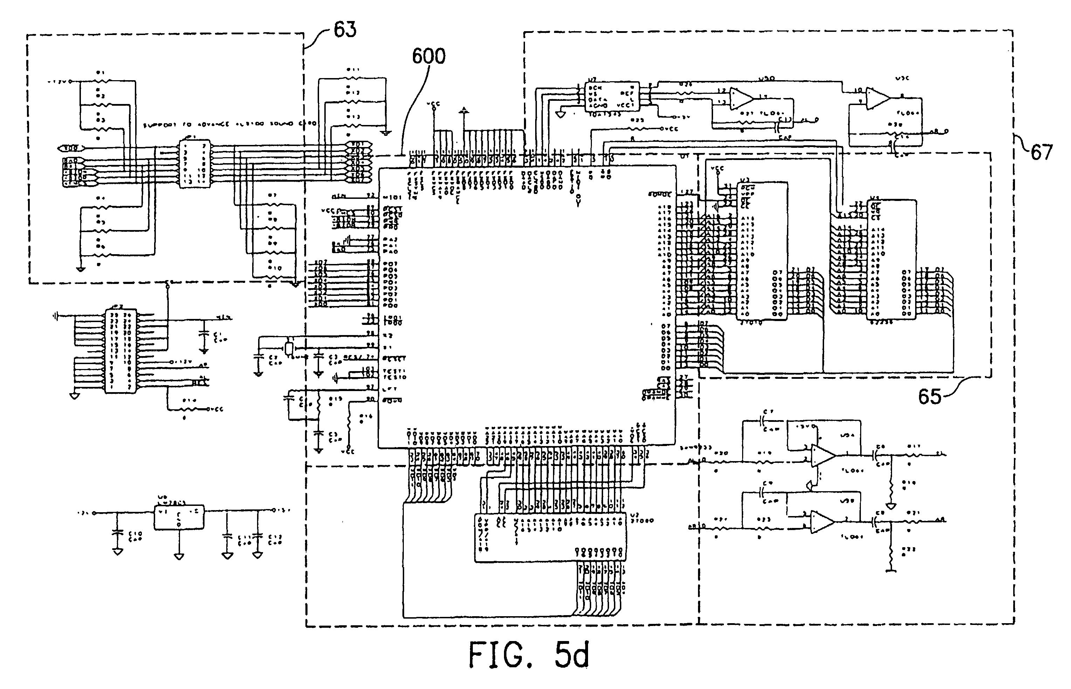

Referring to Fig. 3c, the MIDI card 60 includes: a phase-lock loop 61, a CPU 62, a sound effect processor 63, a digital sound generator 64, a ROM 65, a digital mixer 66 and an audio interface 67. A detailed circuit diagram of the MIDI card 60 is illustrated in Fig. 5d. Wherein, the phase-lock loop 61, the CPU 62, the digital sound generator 64 and the digital audio mixer 66 are integrated in a chip 600.

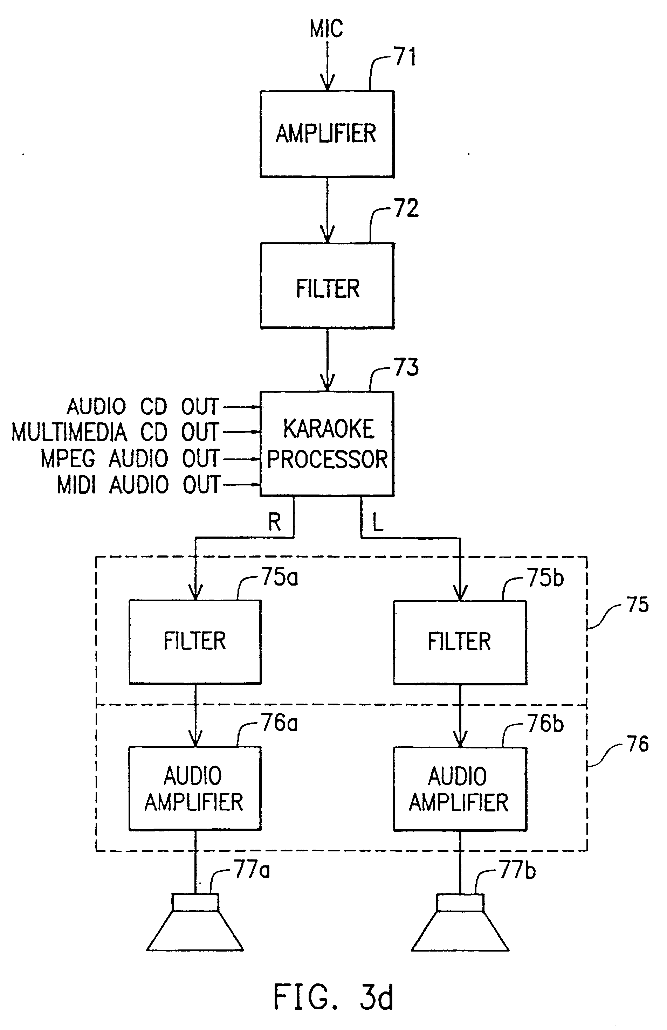

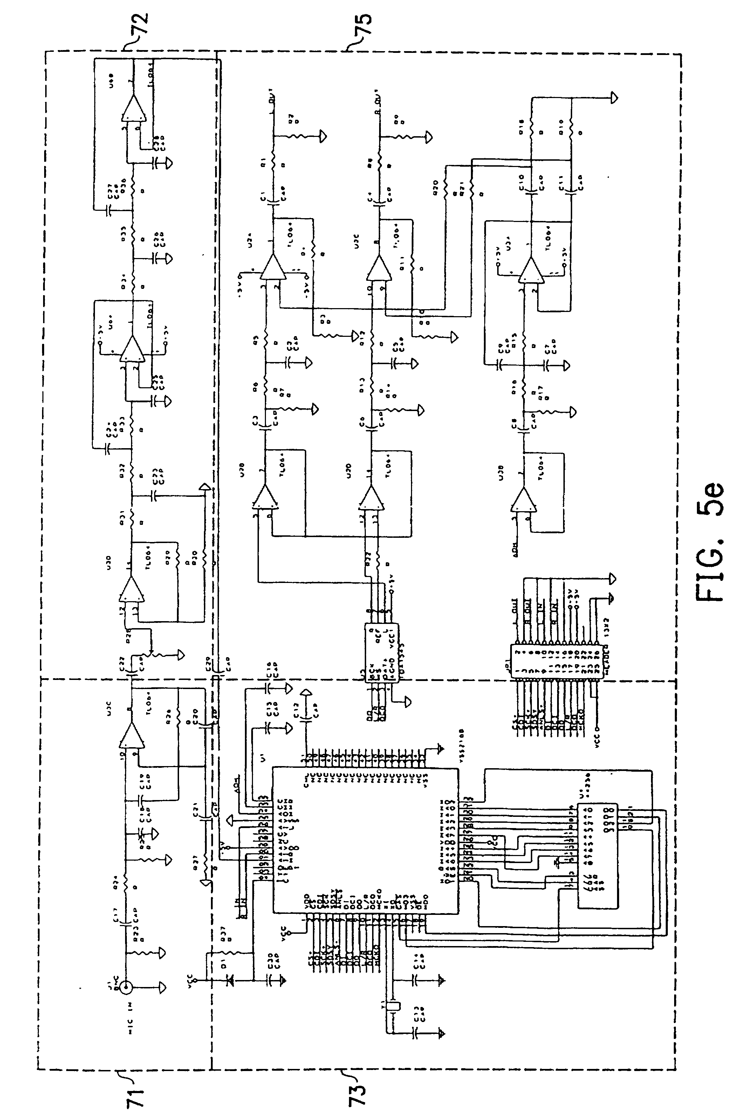

Referring to Fig. 3d, the KARAOKE card 70 includes: an amplifier 71, a filter 72 and a KARAOKE processor 73. The audio signal inputted from microphone is sent to the KARAOKE processor 73 through the amplifier 71 and the filter 72. Meanwhile, the audio signals from other devices, such as the CD-ROM player, the MIDI card and the MPEG card, are also inputted to the KARAOKE processor 73. After being processed by the KARAOKE processor 73, the signals are divided into left and right sound tracks. The signals of the two sound tracks are respectively processed by filters 75a, 75b, amplified by amplifiers 76a, 76b and then outputted by speakers 77a, 77b. A detailed circuit diagram of the KARAOKE card 70 is illustrated in Fig. 5e. Moreover, while the KARAOKE card 70 is not provided in the multimedia reading and learning auxiliary device, it only provides by-pass for the audio signals from the CD-ROM player, the MIDI card or the MPEG card.

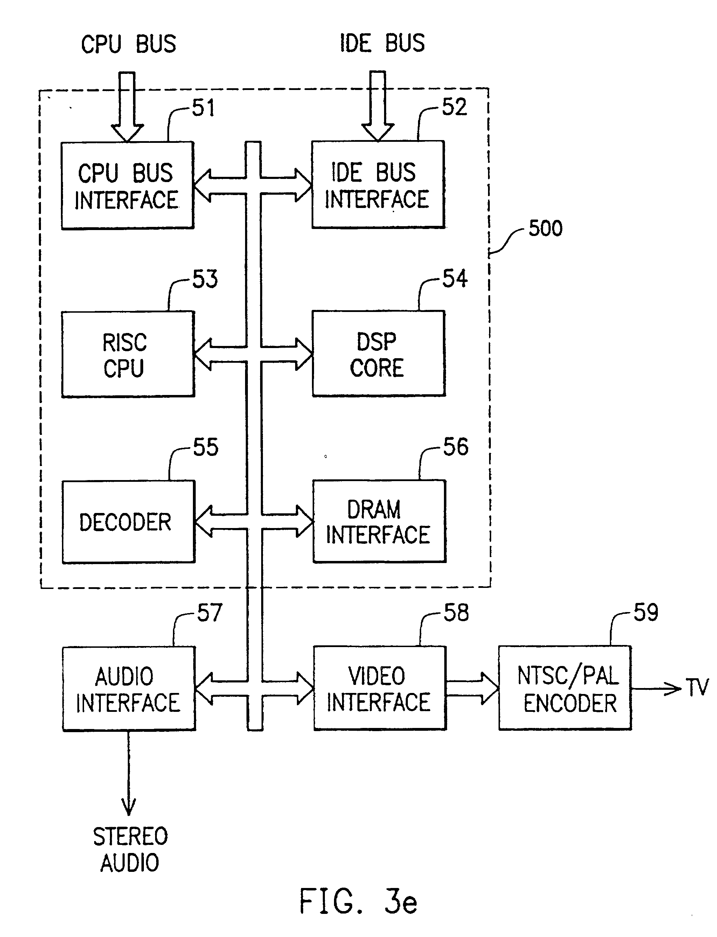

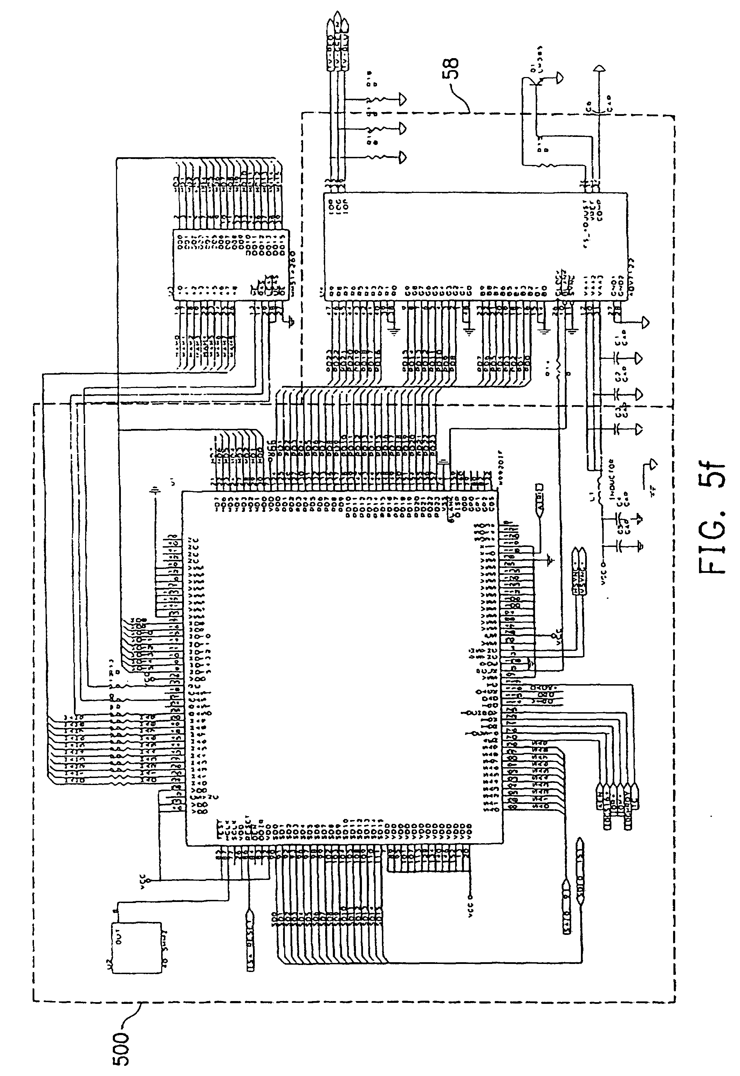

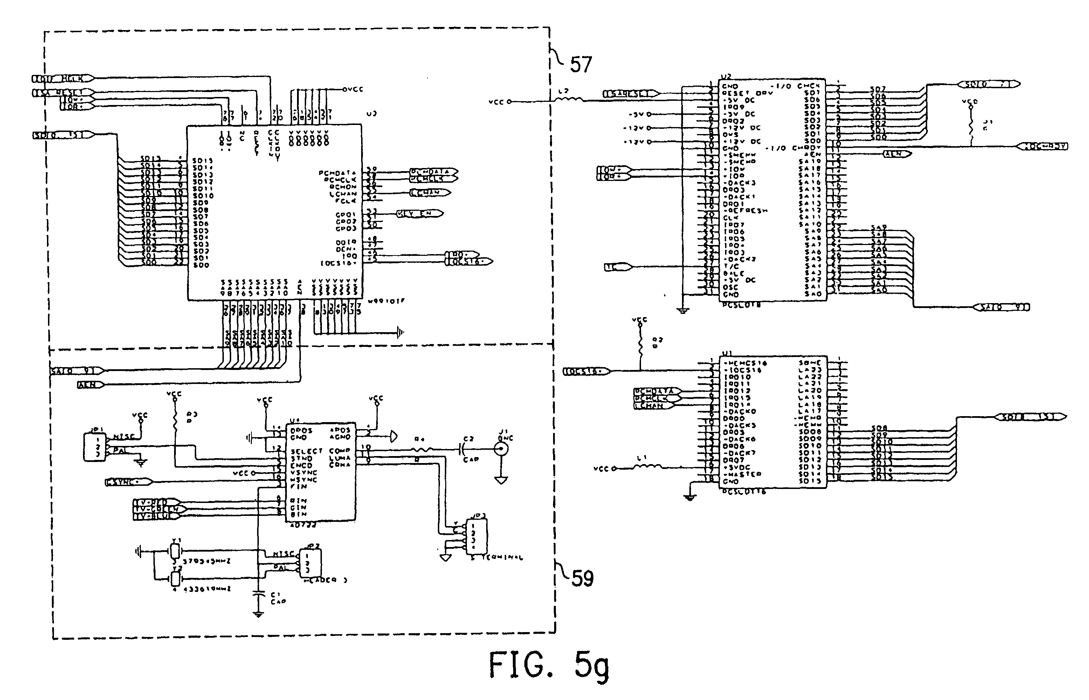

Referring to Fig. 3e, the MPEG card 50 includes: a CPU bus interface 51, an IDE bus interface 52, a RISC (Reduced Instruction Set Computer) CPU 53, a DSP (Digital Signal Processing) core 54, a decoder 55, a DRAM interface 56, an audio interface 57, a video interface 58 and a NTSC (National Television System Committee)/PAL (Phase Alternation Line) encoder 59. Wherein, decompressed audio signals are outputted through the audio interface 57, and video signals are outputted through the video interface 58 and are transformed to NTSC signals or PAL signals by NTSC/PAL encoder 59, then the encoded signals are transmitted to a TV receiver. Further detailed circuit diagrams of the MPEG card 50 are illustrated in Figs. 5f and 5g. Wherein, the CPU bus interface 51, the IDE bus interface 52, the RISC CPU 53, the DSP core 54, the decoder 55, and the DRAM interface 56 are integrated in a chip 500.

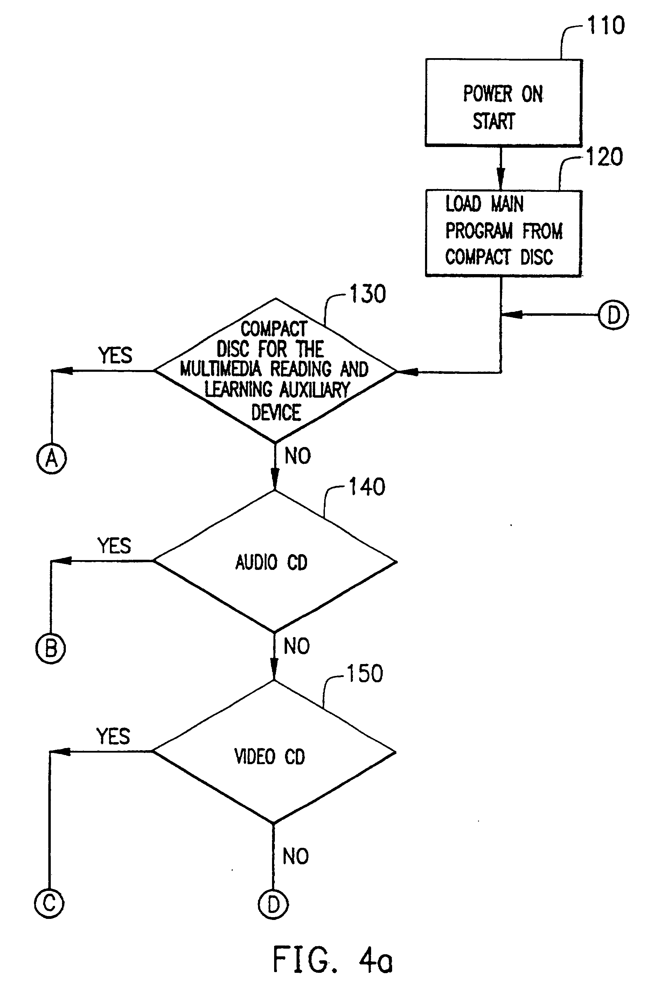

Next, accompanying with Figs. 4a to 4g, the operating process of the multimedia reading and learning auxiliary device according to the present invention is given below. First, referring to Fig. 4a, the process of the main control program includes the steps of: step 110, power on; step 120, loading the main program from a CD (compact disc); step 130, determining whether the format of the CD is a format specially designed for the multimedia reading and learning auxiliary device, then going to A if yes, otherwise going to next step; step 140, determining whether the CD is an audio CD, going to B if yes, otherwise going to next step; step 150, determining whether the CD is a video CD, going to C if yes, otherwise going to D.

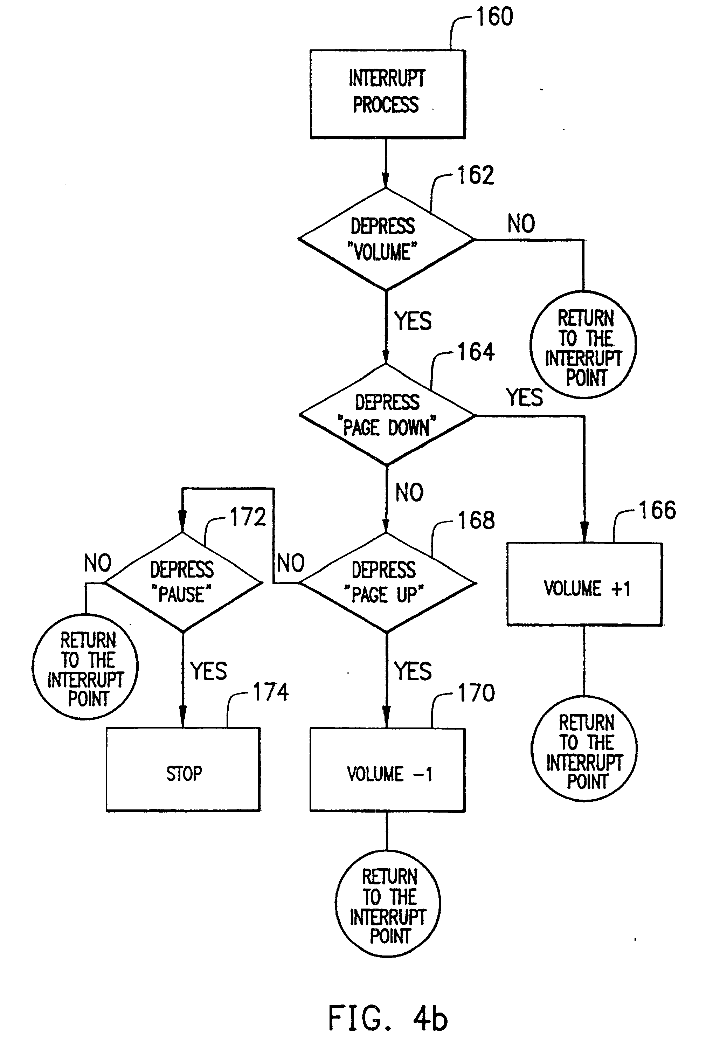

Referring to Fig. 4b, an interrupt routine is illustrated, which includes the steps of: step 160, performing the interrupt routine; step 162, checking whether the volume button is depressed, going to step 164 if yes, otherwise going back to the interrupt point and going on the main program; step 164, checking whether the "PAGE DOWN" button is depressed, if yes, then performing step 166 to increase volume and going back to the interrupt point, otherwise going to step 168; step 168, checking whether the "PAGE UP" button is depressed, if yes, then performing step 170 to reduce volume and going back to the interrupt point, otherwise going to step 172; step 172, checking whether the "PAUSE" button is depressed, if yes, then performing step 174 to stop play-back, otherwise going back to the interrupt point.

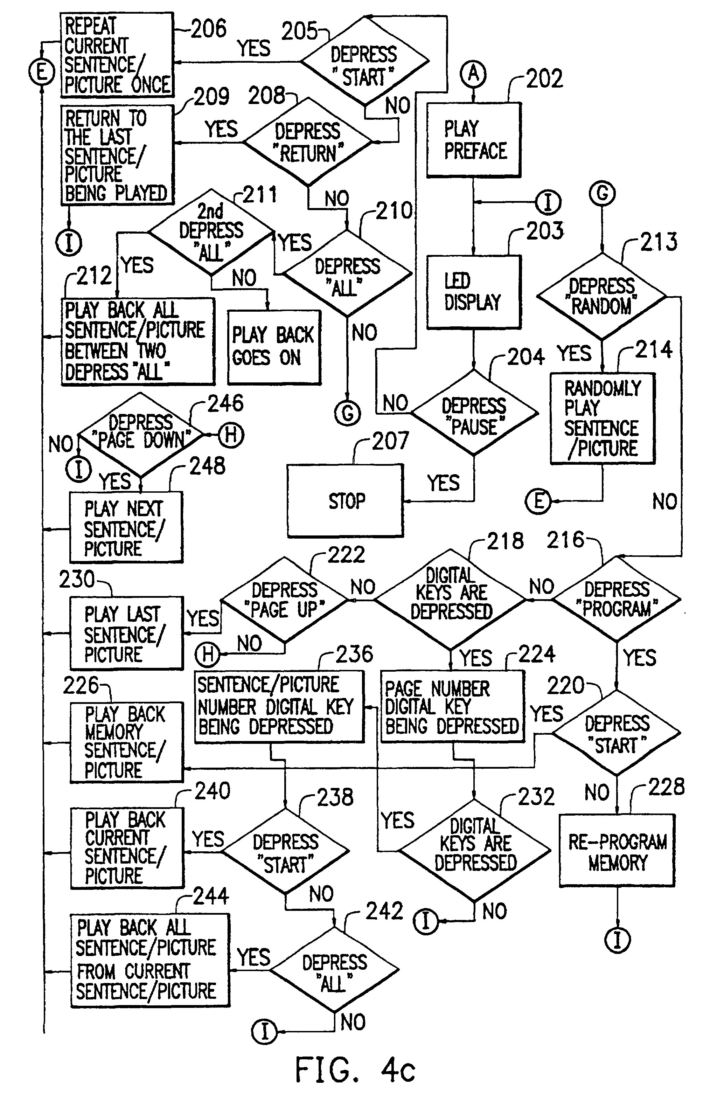

Referring to Fig. 4c, if the CD is determined to be a CD being specially designed for the multimedia reading and learning auxiliary device, then the playback process includes the steps of: step 202, playing the preface back; step 203, displaying relative data on the LED display; step 204, checking whether the "PAUSE" button is depressed, if yes, then performing step 207 to stop playback, otherwise going to step 205; step 205, checking whether the "START" button is depressed, going to step 206 if yes, otherwise going to step 208; step 206, repeating current sentence/picture once; step 208, checking whether the "RETURN" button is depressed, if yes, then performing step 209 to return to the last playback sentence/picture and going to I, otherwise going to the next step; step 210, checking whether the "ALL" button is depressed, going to step 211 if yes, otherwise going to G; step 211, checking whether the "ALL" button is depressed again, going to step 212 if yes, otherwise going on playback; step 212, playing back all sentences/pictures between the first time the "ALL" button is depressed and the second time the "ALL" button is depressed, then going to E. G begins from step 213, checking whether the "RANDOM" button is depressed, going to step 214 if yes, otherwise going to step 216; step 214, randomly playing back sentences/pictures, then going to E; step 216, checking whether the "PROGRAM" button is depressed, going to step 220 if yes, otherwise going to step 218; step 218, checking whether digital buttons are depressed, going to step 222 if no, otherwise going to step 224; step 220, checking whether the "START" button is depressed, going to step 226 if yes, otherwise going to step 228; step 222, checking whether the "PAGE UP" button is depressed, going to step 230 if yes, otherwise going to H; step 224, going to the page having a page number equal to the digital button being depressed, then going to step 232; step 226, playing back the sentences/pictures being programmed, then going to E; step 228, programming the memory, then going to I; step 230, playing back the last sentence/picture, then going to E; step 232, checking whether digital buttons are depressed, going to step 236 if yes, otherwise going to I; step 236, going to the sentence/picture having an index code equal to the digital button being depressed, then going to step 238; step 238, checking whether the "START" button is depressed, if yes, then performing step 240 to play back current sentence/picture, and going to E, otherwise going to step 242; step 242, checking whether the "ALL" button is depressed, if yes, performing step 244 to play back all sentences/pictures from current sentence/picture, and going to E, otherwise going to I. H begins from step 246, checking whether the "PAGE DOWN" button is depressed, going to step 248 if yes, otherwise going to I; step 248, playing back next sentence/picture, then going to E.

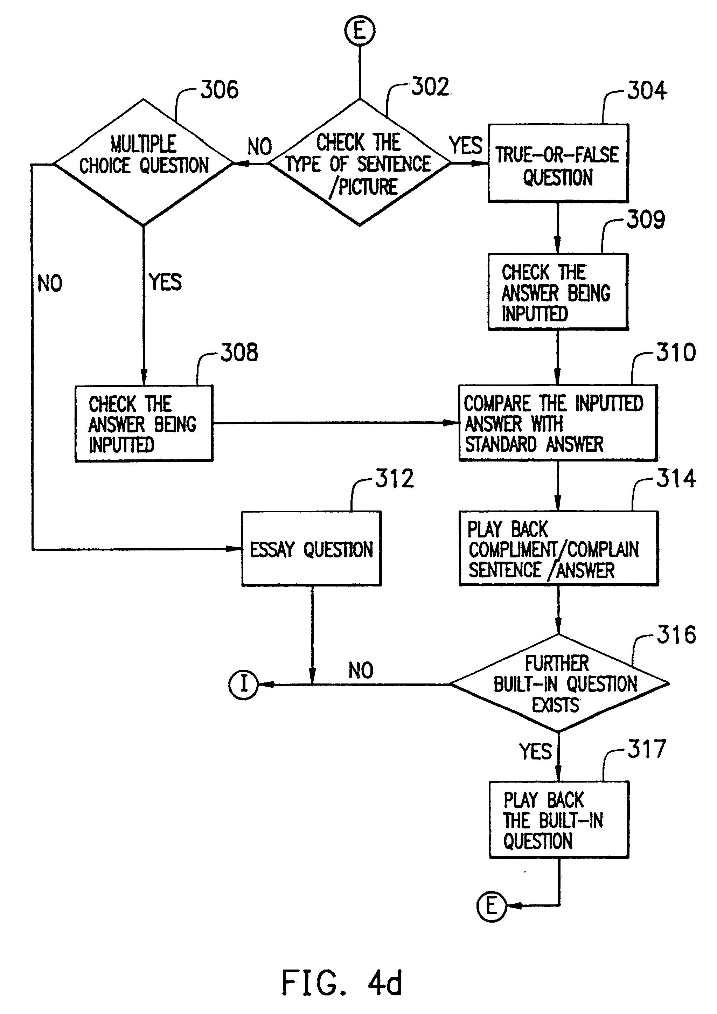

Referring to Fig. 4d, the operating process of the present invention includes a questioning process, which begins from E and includes the steps of: step 302, determining the type of the sentence/picture being played back, going to step 304 if the sentence/picture is a true-or-false question, otherwise going to step 306; step 304, the sentence/picture being determined as a true-or-false question, then going to step 309; step 306, determining whether the type of the sentence/picture being played back is a multiple choice question, going to step 308 if yes, otherwise going to step 312; step 308, checking the answer being inputted by user; step 309, checking the answer being inputted by user; step 310, comparing the standard answer with the answer being inputted by user, then going to step 314; step 312, the sentence/picture being determined to be an essay question, going to I; step 314, playing back a compliment or complaining sentence or an answer according to the comparing result; step 316, checking whether any further built-in question is provided, if yes, performing step 317 to play back the question, then going to E, otherwise going to I.

According to the description for Figs. 4c and 4d, an user has totally free will to control the speed and way to learn which best suit his needs if the multimedia reading and learning auxiliary device of the present invention is used. Moreover, since the format of the CDs being specially designed for the multimedia reading and learning auxiliary device of the present invention conforms to the ISO 9660 standard, the data can be divided into unlimited numbers of unit, and not restricted by the paragraph amount. For example, the whole text can be divided into many individual sentences, and played back sentence by sentence. Further, all data stored in the CDs are sampled by different PCM methods, formatted as MIDI data, or compressed, so that each CD can store much more audio/video data to provide a long-time interactive question-and-answer environment for several hours.

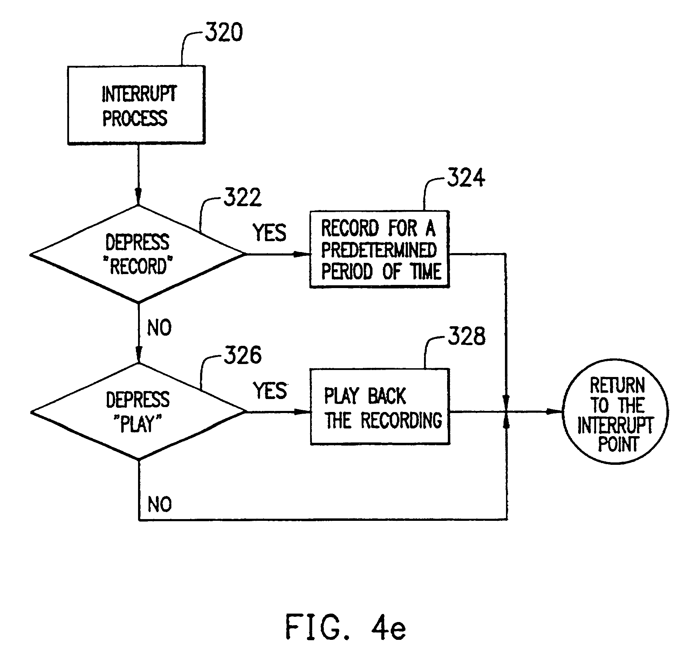

Referring to Fig. 4e, an interrupt routine for the recording process includes the steps of: step 320, starting the interrupt routine; step 322, checking whether the "RECORD" button is depressed, going to step 324 if yes, otherwise going to step 326; step 324, recording for a predetermined period such as 20 seconds, then going back to the interrupt point; step 326, checking whether the "PLAY" button is depressed, if yes, performing step 328 to play back the recording, then going back to the interrupt point, 'otherwise going back to the interrupt point directly.

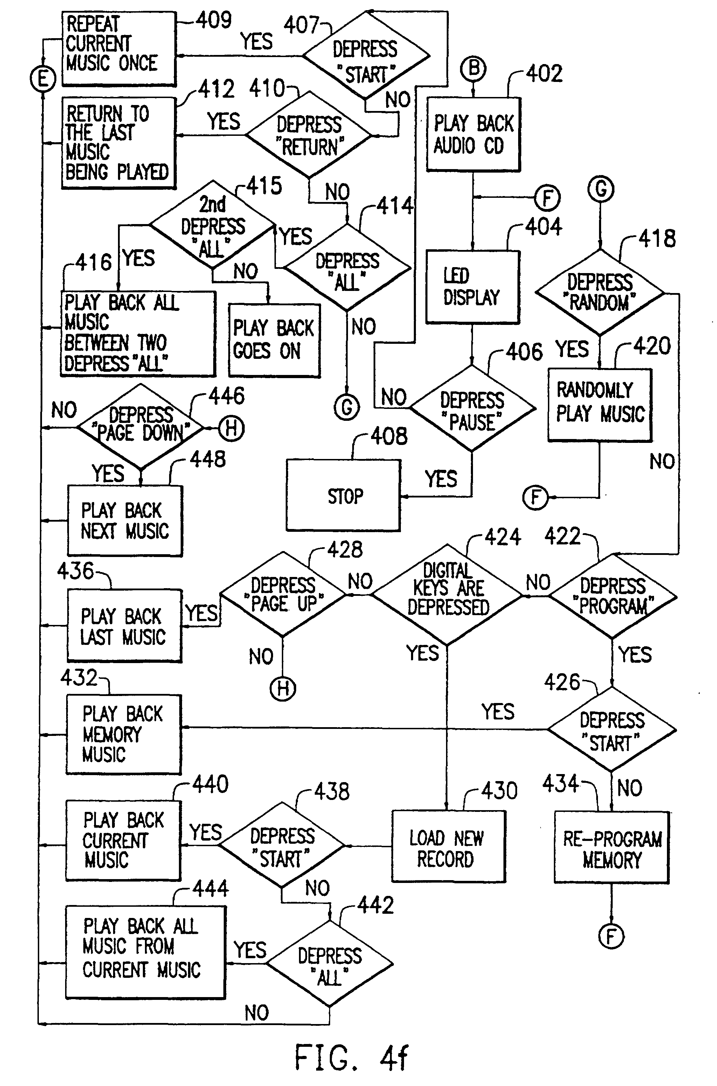

Referring to Fig. 4f, the operating process of playing back audio CDs by the multimedia reading and learning auxiliary device of the present invention includes the steps of: step 402, playing back the audio CD; step 404, displaying relative data on the LED display; step 406, checking whether the "PAUSE" button is depressed, if yes, then performing step 408 to stop playback, otherwise going to step 407; step 407, checking whether the "START" button is depressed, going to step 409 if yes, otherwise going to step 410; step 409, repeating current music once, then going to F; step 410, checking whether the "RETURN" button is depressed, if yes, performing step 412 to return to the last music being played back, then going to F, otherwise going to step 414; step 414, checking whether the "ALL" button is depressed, going to step 415 if yes, otherwise going to G; step 415, checking whether the "ALL" button is depressed again, going to step 416 if yes, otherwise going on playback; step 416, playing back all music between the first time the "ALL" button is depressed and the second time the "ALL" button is depressed, then going to F. G begins from step 418, checking whether the "RANDOM" button is depressed, going to step 420 if yes, otherwise going to step 422; step 420, randomly playing back music, then going to F; step 422, checking whether the "PROGRAM" button is depressed, going to step 424 if no, otherwise going to step 426; step 424, checking whether digital buttons are depressed, going to step 428 if no, otherwise going to step 430; step 426, checking whether the "START" button is depressed, going to step 432 if yes, otherwise going to step 434; step 428, checking whether the "PAGE UP" button is depressed, going to step 436 if yes, otherwise going to H; step 430, loading new records, then going to step 438; step 432, playing back the music being programmed, then going to F; step 434, programming the memory, then going to F; step 436, playing back the last music being played back, then going to F; step 438, checking whether the "START" button is depressed, if yes, then performing step 440 to play back current music, and going to F, otherwise going to step 442; step 442, checking whether the "ALL" button is depressed, if yes, performing step 444 to play back all music from current music, and going to F, otherwise going to F directly. H begins from step 446, checking whether the "PAGE DOWN" button is depressed, going to step 448 if yes, otherwise going to F; step 448, playing back next music, then going to F.

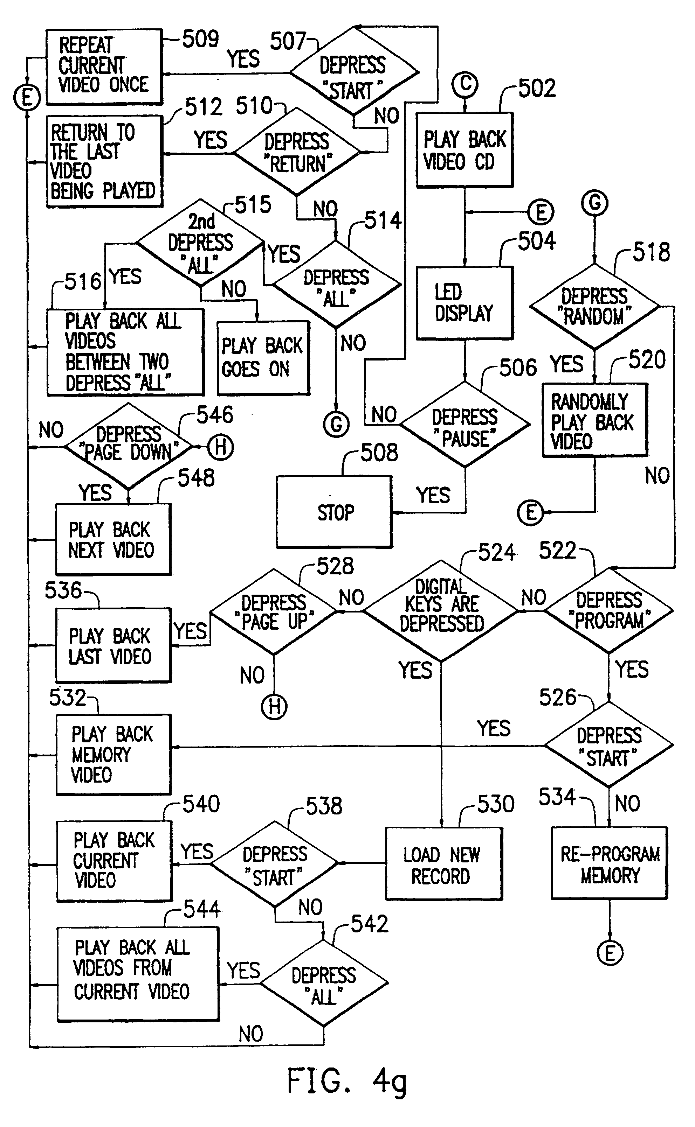

Referring to Fig. 4g, while the CD is determined to be a video CD at step 150, the operating process of playing back the video CD includes the steps of: step 502, playing back the video CD; step 504, displaying relative data on the LED display; step 506, checking whether the "PAUSE" button is depressed, if yes, then performing step 508 to stop playback, otherwise going to step 507; step 507, checking whether the "START" button is depressed, going to step 509 if yes, otherwise going to step 510; step 509, repeating current image once, then going to E; step 510, checking whether the "RETURN" button is depressed, if yes, performing step 512 to return to the last option menu, then going to E, otherwise going to step 514; step 514, checking whether the "ALL" button is depressed, going to step 515 if yes, otherwise going to G; step 515, checking whether the "ALL" button is depressed again, going to step 516 if yes, otherwise going on to playback; step 516, playing back all images between the first time the "ALL" button is depressed and the second time the "ALL" button is depressed, then going to E. G begins from step 518, checking whether the "RANDOM" button is depressed, going to step 520 if yes, otherwise going to step 522; step 520, randomly playing back images, then going to E; step 522, checking whether the "PROGRAM" button is depressed, going to step 524 if no, otherwise going to step 526; step 524, checking whether digital buttons are depressed, going to step 528 if no, otherwise going to step 530; step 526, checking whether the "START" button is depressed, going to step 532 if yes, otherwise going to step 534; step 528, checking whether the "PAGE UP" button is depressed, going to step 536 if yes, otherwise going to H; step 530, loading new records, then going to step 538; step 532, playing back the images being programmed, then going to E; step 534, programming the memory, then going to E; step 536, playing back the last image being played back, then going to E; step 538, checking whether the "START" button is depressed, if yes, then performing step 540 to play back the current image, otherwise going to step 542; step 542, checking whether the "ALL" button is depressed, if yes, performing step 544 to play back all images from the current image, and going to E, otherwise going to E directly. H begins from step 546, checking whether the "PAGE DOWN" button is depressed, going to step 548 if yes, otherwise going to E; step 548, playing back the next image, then going to E.

Moreover, the CDs for the multimedia reading and learning auxiliary device of the present invention may be stored with driver programs to allow the CDs to run on a PC.

While the present invention has been particularly shown and described with reference to a preferred embodiment, it will be readily appreciated by those of ordinary skill in the art that various changes and modifications may be made without departing from the scope of the invention. The scope of the invention is defined by the appended claims.

## Claims

1. A multimedia reading and learning auxiliary device for printed books which is intended to accompany a printed book to provide a book reader with audio/video data and additional remarks relevant to the printed book, comprising a multimedia CD-ROM player is separate from the printed book for retrieving relevant data and additional remarks from a CD-ROM format disc, **characterised in that** said device further comprises:
a wireless keypad, which is separate from the CD-ROM player and the printed book, for receiving control instructions inputted corresponding to page numbers and numerical and/or alphabetical printed index codes printed on the printed book to remote control the CD-ROM player, so that a user can mainly read the printed book and at time of need wirelessly retrieve desired relevant audio/video data and additional remarks through the multimedia reading and learning auxiliary device for printed books.

2. A multimedia reading and learning auxiliary device as claimed in claim 1, further comprising: a KARAOKE card for playing back accompanying music according to data stored on the compact disc.

3. A multimedia reading and learning auxiliary device as claimed in claim 1 or claim 2, further comprising: a MPEG card for playing back images according to video data stored on the compact disc.

4. A multimedia reading and learning auxiliary device as claimed in claim 2, further comprising: a MIDI card for playing back music according to MIDI data stored on the compact disc.

5. A multimedia reading and learning auxiliary device as claimed in claim 3, further comprising: a MIDI card for playing back music according to MIDI data stored on the compact disc.

6. An operating methof of a multimedia reading and learning auxiliary device for printed books comprising the steps of:
inputting a page number of the printed book and then arbitrarily inputting one of a plurality of **numerical and/or alphabetical printed** index codes printed on the page to the multimedia reading and learning auxiliary device for printed books by a wireless keypad which is **separate** from the printed book; and
making the multimedia reading and learning auxiliary device for printed books **retrieving** different types of data from a CD-ROM format disc according to **the input numerical and/or alphabetical printed** index code and **playing** back **the** data in audio and/or video form.

7. An operating method as claimed in claim 6, wherein, the different types of data employing various PCM sampling sizes, sampling frequencies, MIDI formats and compressed methods can be stored on the compact disc simultaneously which conforms to ISO 9660 format.

8. An operating method as claimed in claim 6, wherein, all programs needed to operate the multimedia reading and learning auxiliary device can be directly stored in the compact disc, and can be automatically downloaded and executed by the reading and learning auxiliary device while power on.

9. An operating method as claimed in claim 6, wherein, each of the index codes inputted can be a set of alphanumeric figures printed on the desired position of the printed book or numbers of the printed book, the set of alphanumeric figures can be less than seven figures to point the position including volume, lesson, chapter, section, page, paragraph or sentence of the data being selected corresponding to the printed book.

## Patentansprüche

1. Multimedia-Hilfs-Lese- und Lernvorrichtung für gedruckte Bücher, welche zum Begleiten eines gedruckten Buches vorgesehen ist, um den Leser des Buches mit Audio/Video-Daten und zusätzlichen relevanten Anmerkungen zum gedruckten Buch zu versorgen, mit einem vom Buch getrennten Multimedia CD-ROM Abspielgerät zum Erlangen von relevanten Daten und zusätzlichen Informationen von einer CD-ROM-Disc, **dadurch gekennzeichnet, dass** diese Vorrichtung ferner aufweist:
ein drahtloses Tastenfeld, das getrennt ist vom CD-ROM Abspielgerät und dem gedruckten Buch, zum Empfangen von Kontroll-Instruktionen, welche eingegeben sind korrespondierend zu den Seitenzahlen und numerisch- und/oder alphabetisch gedruckten Index-Kodierungen, die im gedruckten Buch gedruckt sind, zum Fernbedienen des CD-ROM Abspielgeräts, so dass ein Benutzer hauptsächlich das gedruckte Buch lesen kann und bei Bedarf drahtlos die gewünschten relevanten Audio/Video-Daten und zusätzliche Informationen über die Multimedia-Hilfs-Lese- und Lernvorrichtung für gedruckte Bücher bekommen kann.

2. Multimedia Hilfs-Lese- und Lernvorrichtung für gedruckte Bücher nach Anspruch 1, welche weiter aufweist: eine Karaoke-Karte zum Zurückspielen von begleitender Musik, die übereinstimmt mit auf der Compact-Disc gespeicherten Daten.

3. Multimedia Hilfs-Lese- und Lernvorrichtung für gedruckte Bücher nach Anspruch 1 oder 2, welche weiter aufweist: eine MPEG-Karte zum Zurückspielen von Bildern, die übereinstimmen mit auf der Compact-Disc gespeicherten Viedo-Daten.

4. Multimedia Hilfs-Lese- und Lernvorrichtung für gedruckte Bücher nach Anspruch 2, welche weiter aufweist: eine MIDI-Karte, zum Zurückspielen von Musik, die übereinstimmt mit auf der Compact-Disc gespeicherten MIDI-Daten.

5. Multimedia Hilfs-Lese- und Lernvorrichtung für gedruckte Bücher nach Anspruch 3, welche weiter aufweist: eine MIDI-Karte, zum Zurückspielen von Musik, die übereinstimmt mit auf der Compact-Disc gespeicherten MIDI-Daten.

6. Verfahren zum Betrieb einer Multimedia Hilfs-Lese- und Lernvorrichtung für gedruckte Bücher, welches folgende Schritte aufweist:
Eingeben einer Seitenzahl des gedruckten Buchs und danach Eingabe eines beliebigen aus einer Mehrzahl von numerisch- und/oder alphabetisch gedruckten Index-Kodes, welche auf der Seite gedruckt sind, in die Multimedia-Hilfs-Lese- und Lernvorrichtung für gedruckte Bücher mittels eines drahtlosen Tastenfelds, das getrennt vom gedruckten Buch ist; und Veranlassen, dass die Multimedia-Hilfs-Lese- und Lernvorrichtung für gedruckte Bücher unterschiedliche Datentypen von einer CD-ROM-Disc auffindet, entsprechend der Eingabe der numerisch- und/oder alphabetisch gedruckten Index-Kodierungen, und dass die Daten im Audio- und/oder Video-Format zurückgespielt werden.

7. Verfahren nach Anspruch 6, wobei die unterschiedlichen Datentypen, die verschiedene PCM-Musterformate, Abtastfrequenzen, MIDI-Formate und Komprimierungsmethoden enthalten, simultan auf der Compact-Disc gespeichert werden können, was dem ISO 9660 Format entspricht.

8. Verfahren nach Anspruch 6, wobei alle benötigten Programme zum Betrieb der Multimedia Hilfs-Lese- und Lernvorrichtung für gedruckte Bücher direkt auf der Compact-Disc gespeichert werden können, und während des Einschaltens der Hilfs-Lese- und Lernvorrichtung automatisch heruntergeladen und ausgeführt werden können.

9. Verfahren nach Anspruch 6, wobei jeder der eingegebenen Index-Codes ein Satz alphanumerischer Abbildungen, gedruckt an der gewünschten Stelle im gedruckten Buch oder Nummern des gedruckten Buchs sein können, wobei der Satz alphanumerischer Abbildungen weniger als sieben Abbildungen aufweisen kann, zum Aufzeigen der Position inklusive Volumen, Lektion, Kapitel, Abschnitt, Seite, Absatz oder Satz der ausgewählten, mit dem gedruckten Buch übereinstimmenden Daten.

## Revendications

1. Dispositif auxiliaire de lecture et d'apprentissage multimédia pour livres imprimés qui a pour objet de compléter un livre imprimé pour fournir au lecteur de livres des données audio/vidéo et des remarques pertinentes supplémentaires sur le livre imprimé, comprenant un lecteur de CD-ROM multimédia à part du livre imprimé pour récupérer des données pertinentes et des remarques supplémentaires d'un disque de la taille d'un CD-ROM, **caractérisé en ce que** ledit dispositif comprend en outre :
un pavé numérique sans fil, qui vient à part du lecteur de CD-ROM et du livre imprimé, pour recevoir les instructions de commande saisies correspondant aux numéros de pages et aux codes d'index numériques et/ou alphabétiques imprimés sur le livre imprimé pour commander à distance le lecteur de CD-ROM, de telle sorte qu'un utilisateur puisse lire principalement le livre imprimé et, si besoin est, récupérer à l'aide du dispositif sans fil les données audio/vidéo pertinentes souhaitées et les remarques supplémentaires grâce au dispositif auxiliaire de lecture et d'apprentissage multimédia pour livres imprimés.

2. Dispositif auxiliaire de lecture et d'apprentissage multimédia selon la revendication 1, comprenant en outre : une carte KARAOKÉ pour lire de la musique d'accompagnement stockée sous forme de données sur le disque compact.

3. Dispositif auxiliaire de lecture et d'apprentissage multimédia selon la revendication 1 ou la revendication 2, comprenant en outre : une carte MPEG pour lire des images stockées sous forme de données vidéo sur le disque compact.

4. Dispositif auxiliaire de lecture et d'apprentissage multimédia selon la revendication 2, comprenant en outre : une carte MIDI pour lire de la musique stockée sous forme de données MIDI sur le disque compact.

5. Dispositif auxiliaire de lecture et d'apprentissage multimédia selon la revendication 3, comprenant en outre : une carte MIDI pour lire de la musique stockée sous forme de données MIDI sur le disque compact.

6. Procédé de fonctionnement d'un dispositif auxiliaire de lecture et d'apprentissage multimédia pour livres imprimés comprenant l'étape consistant à :
saisir un numéro de page du livre imprimé, puis saisir de manière arbitraire l'un d'une pluralité de codes d'index numériques et/ou alphabétiques imprimés sur la page sur le dispositif auxiliaire de lecture et d'apprentissage multimédia pour livres imprimés au moyen d'un pavé numérique sans fil qui vient à part du livre imprimé ; et
faire en sorte que le dispositif auxiliaire de lecture et d'apprentissage multimédia pour livres imprimés récupère différents types de données d'un disque de la taille d'un CD-ROM en fonction du code d'index numérique et/ou alphabétique saisi, et lire les données sous forme audio et/ou vidéo.

7. Procédé de fonctionnement selon la revendication 6, dans lequel, les différents types de données utilisant plusieurs tailles d'échantillonnage MIC, des fréquences d'échantillonnage, des formats MIDI et des procédés de compression peuvent être stockés sur le disque compact simultanément, qui est conforme au format ISO 9660.

8. Procédé de fonctionnement selon la revendication 6, dans lequel, tous les programmes nécessaires au fonctionnement du dispositif auxiliaire de lecture et d'apprentissage multimédia peuvent être stockés directement sur le disque compact, et peuvent être téléchargés automatiquement et exécutés par le dispositif auxiliaire de lecture et d'apprentissage lorsque celui-ci est en marche.

9. Procédé de fonctionnement selon la revendication 6, dans lequel, chacun des codes d'index saisi peut correspondre à un ensemble de chiffres alphanumériques imprimés à l'endroit souhaité du livre imprimé ou des numéros du livre imprimé, l'ensemble de chiffres alphanumériques pouvant être composé de moins de sept chiffres pour désigner l'endroit, y compris le volume, la leçon, le chapitre, la section, la page, le paragraphe ou la phrase des données sélectionnées correspondant au livre imprimé.
